# EUROPÄISCHE PATENTANMELDUNG

(11) **EP 2 466 783 A1**
(43) Veröffentlichungstag der Anmeldung: **20.06.2012**
(21) Anmeldenummer: 11009195.6
(22) Anmeldetag: 21.11.2011
(51) Int. Cl.: H04L 9/30, G09C 1/00, H04L 9/06

(54) **Sichere rsa-Implementierung**

(30) Priorität: 20.12.2010 DE 102010055238
(71) Anmelder: Giesecke & Devrient GmbH, 81677 München (DE)
(72) Erfinder: Bauer, Sven, Dr., 85591 Vaterstetten (DE)

(57) **Zusammenfassung**

In einem Verfahren zur gesicherten Implementierung einer kryptographischen Funktion auf einem portablen Datenträger (10) gegen Fehlerangriffe wird auf Basis eines geheimen Schlüssels (d) in dem Datenträger (10) eine digitale Signatur (s) erzeugt (S1). Diese Signatur (s) wird dann mittels eines dem geheimen Schlüssel (d) zugeordneten und nicht in dem Datenträger (10) gespeicherten öffentlichen Schlüssels (e) verifiziert (S3; S4), bevor die Signatur (s) ausgegeben wird (S5). Dabei wird der öffentliche Schlüssel (e) anhand von in dem Datenträger (10) gespeicherten Komponenten (p; q; dₚ; d_{q}) des geheimen Schlüssels (d) in dem Datenträger (10) berechnet (S2).

## Beschreibung

Die vorliegende Erfindung betrifft ein Verfahren zur sicheren Implementierung einer kryptographischen Funktion auf einem portablen Datenträger gegen Fehlerangriffe sowie einen entsprechend eingerichteten Datenträger mit einer solchen Funktion.

Kryptographische Funktionen werden auf einem portablen Datenträger, beispielsweise einer Chipkarte, vielfach im Rahmen von sicherheitsrelevanten Funktionalitäten des Datenträgers, beispielsweise Authentisierungsverfahren, Bezahl-Anwendungen und dergleichen, verwendet. Seit einiger Zeit sind verschiedene so genannte Fehlerangriffe auf portable Datenträger bekannt. Ein solcher Fehlerangriff wird dadurch durchgeführt, dass durch externes Einwirken auf den Datenträger das Berechnen der kryptographischen Funktion in dem Datenträger derart gezielt gestört wird, dass durch Vergleichen des gestört berechneten Funktionswerts mit einem ungestört berechneten Funktionswert ein - eventuell geheimer - Eingabewert oder in dem Datenträger zur Berechnung der Funktion gespeicherte, geheime Daten, beispielsweise ein geheimer Schlüssel, bestimmt werden können.

Für eine Reihe konkreter kryptographischer Funktionen sind bereits spezifische Fehlerangriffe bekannt. Insbesondere ist es bekannt, dass eine bestimmte, bezüglich der benötigten Ressourcen in dem Datenträger vorteilhafte Implementation des RSA-Verfahrens sehr anfällig gegen einen spezifischen Fehlerangriff ist (D. Boneh, R. A. DeMillo, R. J. Lipton, "On the Importance of Checking Cryptographic Protocols for Faults", Eurocrypt 1997).

Beim RSA-Verfahren wird ein Schlüsselpaar aus einem öffentlichen und einem geheimen Schlüssel verwendet, um Daten zu verschlüsseln, digital zu signieren, zu entschlüsseln oder eine Signatur zu verifizieren. Der geheime Schlüssel setzt sich dabei aus einem geheimen Exponenten d sowie zwei geheimen Primzahlen p und q zusammen. Der öffentliche Schlüssel ist durch einen öffentlichen Exponenten e sowie das Produkt n=p*q gegeben. Der öffentliche Exponent e steht zu dem geheimen Exponenten d in einen vorgegebenen Verhältnis, nämlich: e*d =1 mod Φ(n), wobei Φ(n) := (p-1)*(q-1) gesetzt wird. Anstelle von Φ(n) kann auch das kleinste gemeinsame Vielfache von p-1 und q-1 betrachtet werden. Dieses wird auch mit kgV(p-1, q-1) bezeichnet.

Zu einem Klartext h kann eine digitale Signatur s dadurch gebildet werden, dass s = h^{d} mod n berechnet wird. Um diese Berechnung in dem Datenträger effizienter durchführen zu können, werden zu dem geheimen Exponenten d Anteile desselben gesichert in dem Datenträger gespeichert. Dies sind die beiden Primzahlen p und q sowie ein erster und ein zweiter Anteil dp und dq des geheimen Exponenten d. Diese Anteile berechnen sich, indem der Exponent d modulo p-1- im Falle von dp - bzw. q-1 - im Falle von dq - reduziert wird. Schließlich kann auch der Klartext h modulo p bzw. q reduziert werden, wodurch sich Anteile hₚ = h mod p und hq = h mod q ergeben. Es gilt nun, dass sich eine Berechnung von s = h^{d} mod n auch vermöge der Vorschrift s = sₚ + p (((1/p) mod q) (sₚ -s_{q}) mod q) durchführen lässt, wobei sₚ := hₚ^{dp} mod p und s_{q} := h_{q}^{dq} mod q gesetzt wird. Eine solche Berechnung beruht auf dem so genannten Chinesischen Restsatz - einem Satz der elementaren Zahlentheorie - und ist hinsichtlich der Anzahl erforderlicher Rechenschritte zumindest dreimal schneller als das hergebrachte Verfahren eines wiederholten Quadrierens und benötigt zudem nur etwa die Hälfte des dort benötigten Speicherplatzes.

In dem oben genannten Artikel (Boneh et al.) ist nachgewiesen worden, dass bereits ein erfolgreicher Fehlerangriff auf eine Berechnung von s mittels des beschriebenen effektiven Verfahrens ausreicht, um das entsprechende Kryptosystem vollständig zu brechen.

Eine bekannte Maßnahme zum Erkennen und Verhindern eines Fehlerangriffs auf einen Datenträger ist es allgemein, datenträgerintern sicherheitsrelevante Berechnungen redundant durchzuführen. Nur wenn dabei keine Inkonsistenzen auftreten, erfolgt eine Ausgabe der erzeugten Daten. Vorliegend kann ein Fehlerangriff auf das Berechnen der Signatur s dadurch zuverlässig erkannt werden, dass die Signatur datenträgerintern verifiziert wird, bevor diese ausgegeben wird. Dazu ist es erforderlich, h = s^{e} mod n zu berechnen.

Es stellt sich hier das Problem, dass bekannte Implementationen des RSA-Verfahrens auf portablen Datenträgern nicht vorsehen, den öffentlichen Exponenten e in dem Datenträger zu speichern. Dieser wird dort zum Berechnen der Signatur selbst - wie beschrieben - nicht benötigt.

Um eine Verifikation der Signatur trotzdem durchführen zu können, ist in der US 2005/ 0084096 A1 und der EP 1 652 336 B1 vorgeschlagen worden, den öffentlichen Exponenten e dadurch zu erraten, dass potentielle Kandidaten aus einer vorgegebenen Kandidatenmenge nacheinander getestet werden. Dieses Verfahren schlägt allerdings dann fehl, wenn der konkrete öffentliche Schlüssel in der vorgegebenen Kandidatenmenge nicht enthalten ist.

Es ist demnach Aufgabe der vorliegenden Erfindung, ein Verfahren vorzuschlagen, welches zuverlässig einen Fehlerangriff auf eine RSA-basierte kryptographische Funktion erkennt und verhindert.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

In einem erfindungsgemäßen Verfahren zur gesicherten Implementierung einer kryptographischen Funktion auf einem portablen Datenträger gegen Fehlerangriffe wird auf Basis eines geheimen Schlüssels in dem Datenträger eine digitale Signatur erzeugt. Diese Signatur wird dann mittels eines dem geheimen Schlüssel zugeordneten und nicht in dem Datenträger gespeicherten öffentlichen Schlüssels verifiziert, bevor die Signatur ausgegeben wird. Erfindungsgemäß wird der öffentliche Schlüssel anhand von in dem Datenträger gespeicherten Komponenten des geheimen Schlüssels in dem Datenträger berechnet.

Demnach umfasst ein erfindungsgemäßer portabler Datenträger einen Prozessor, zumindest einen Speicher sowie eine in dem Speicher gespeicherte und durch den Prozessor ausführbare kryptographische Funktion zum Bilden einer digitalen Signatur auf Basis eines geheimen Schlüssels. Der Datenträger ist eingerichtet, die Signatur vor der Ausgabe mittels eines dem geheimen Schlüssel zugeordneten, nicht in dem Datenträger gespeicherten öffentlichen Schlüssels zu verifizieren. Erfindungsgemäß umfasst der Datenträger weiterhin eine Verifikationseinrichtung. Diese ist eingerichtet, den öffentlichen Schlüssel anhand von in dem Datenträger gespeicherten Komponenten des geheimen Schlüssels zu berechnen.

Auf diese Weise ist es stets möglich, die Signatur zu verifizieren, bevor diese ausgegeben wird. Ein "Erraten" des öffentlichen Schlüssels aus einer Kandidatenmenge ist nicht nötig. Damit entfällt die Möglichkeit, dass dabei kein korrekter öffentlicher Schlüssel erhalten wird. Somit kann ein Scheitern der Verifikation oder die Notwendigkeit, die Verifikation auf andere, weniger sichere Weise durchführen zu müssen, ausgeschlossen werden. Ein Fehlerangriff auf den Datenträger kann damit stets sicher erkannt werden. Die Tatsache, dass der zur Verifikation der Signatur notwendige öffentliche Schlüssel nicht in dem Datenträger gespeichert ist, stellt erfindungsgemäß kein Hindernis dar, da eine explizite Berechnung des öffentlichen Schlüssels aus Anteilen des geheimen Schlüssels datenträgerintern durchgeführt werden kann.

Vorzugsweise wird die kryptographische Funktion als ein RSA-Verfahren implementiert. Dabei wird der geheime Schlüssel durch einen geheimen Exponenten, welcher in der Regel mit d bezeichnet wird, sowie eine erste und eine zweite geheime Primzahl vorgegeben. Die Primzahlen werden hier und im Folgenden mit p und q bezeichnet. Der öffentliche Schlüssel wird durch einen öffentlichen Exponenten, zumeist mit e bezeichnet, vorgegeben. Es gilt zwischen dem geheimen Exponenten d und dem öffentlichen Exponenten e eine vorgegebene mathematische Beziehung: e und d sind modulo einem von den beiden Primzahlen p und q abgeleiteten Wert W invers zueinander: e*d ≡ 1 mod W. Der Wert W kann durch die so genannte Φ-Funktion gegeben sein, W:= Φ(n) : = (p-1)*(q-1), wobei n := p*q gesetzt wird. Alternativ kann der Wert W auch durch das kleinste gemeinsame Vielfache vom p-1 und q-1 bestimmt werden, W := kgV(p-1, q-1).

Der geheime Exponent d kann auf der Basis verschiedener Komponenten des Exponenten in dem Datenträger gespeichert werden. D.h. Berechnungen, welche die Kenntnis des Exponenten d erfordern, können gleichfalls ausgeführt werden, wenn anstelle von d die nachstehend genannten Komponenten gegeben sind. Diese Komponenten des geheimen Schlüssels d werden durch die beiden geheimen Primzahlen p und q sowie durch bestimmte Anteile des geheimen Exponenten d vorgegeben. Ein erster Anteil des geheimen Exponenten, der mit dp bezeichnet werden soll, ist durch den Rest des geheimen Exponenten d modulo der um eins verminderten ersten Primzahl, p-1, vorgegeben: dp := d mod (p-1). Ein zweiter Anteil des geheimen Exponenten d, der entsprechend mit dq bezeichnet wird, wird durch den Rest des geheimen Exponenten d modulo der um eins verminderten zweiten Primzahl, q-1, vorgegeben: d_{q} := d mod (q-1).

Ein Schritt zur Berechnung des öffentlichen Schlüssels aus den Komponenten des geheimen Schlüssels erfordert die Berechnung des größten gemeinsamen Teilers der um eins verminderten ersten Primzahl, p-1, und der um eins verminderten zweiten Primzahl, q-1. Dieser Teiler wird im Folgenden mit g bezeichnet, g:= ggT(p-1, q-1). Eine Berechnung dieses größten gemeinsamen Teilers kann beispielsweise mittels des bekannten Euklidischen Algorithmus erfolgen. Andere bekannte Verfahren sind gleichfalls anwendbar.

Es ist bekannt, dass der berechnete größte gemeinsame Teiler in einer vorgegebenen Weise als eine Summe eines ersten und eines zweiten Produkts dargestellt werden kann. Das erste Produkt, welches mit P1 bezeichnet wird, besteht dabei aus einem ersten Faktor, der mit r bezeichnet wird, und einem weiteren Faktor, der durch die um eins verminderte erste Primzahl, p-1, gegeben wird, P1 := r*(p-1). Das zweite Produkt, dieses sei mit P2 bezeichnet, besteht aus einem zweiten Faktor, der mit s bezeichnet wird, und einem weiteren Faktor, der entsprechend durch die um eins verminderte zweite Primzahl, q-1, gebildet wird, P2 := s*(q-1). Damit lässt sich der größte gemeinsame Teiler g von p-1 und q-1 wie folgt darstellen:
g := P1 + P2 := r*(p-1) + s*(q-1). Eine solche Darstellung kann direkt bei der Berechnung von g erhalten werden, sofern diese geeignet durchgeführt wird,
beispielsweise mittels eines Verfahrens, welches unter der Bezeichnung "erweiterter Euklidischer Algorithmus"" bekannt ist. Dieser liefert neben dem Teiler g auch die Faktoren r und s.

Zur Berechnung des öffentlichen Schlüssels aus den Komponenten des geheimen Schlüssels ist es weiterhin erforderlich, dass bestimmte Anteile des öffentlichen Exponenten in der nachstehend beschriebenen Weise berechnet werden. Diese Berechnungen können vor oder nach der Berechnung des Teilers g erfolgen.

Als ein erster Anteil des öffentlichen Exponenten e, nachstehend mit eₚ bezeichnet, wird das Inverse des ersten Anteils dₚ des geheimen Exponenten d modulo der um eins verminderten ersten Primzahl, p-1, berechnet, d.h. für den ersten Anteil eₚ gilt die Gleichung eₚ = dₚ⁽⁻¹⁾ mod (p-1). Eine solche Berechnung kann beispielsweise mittels des vorstehend bereits erwähnten Euklidischen Algorithmus erfolgen. Entsprechend wird als ein zweiter Anteil des öffentlichen Exponenten e, nachstehend mit eq bezeichnet, das Inverse des zweiten Anteils dq des geheimen Exponenten d modulo der um eins verminderten zweiten Primzahl, q-1, berechnet, d.h. es gilt für e_{q} die Gleichung e_{q} = d_{q}⁽⁻¹⁾ mod (q-1).

Als ein dritter Anteil des öffentlichen Exponenten e wird anschließend vorzugsweise ein Quotient, nachstehend mit m bezeichnet, bestimmt. Dieser Quotient umfasst als Dividend die Differenz des ersten und des zweiten Anteils des öffentlichen Exponenten e, also die Differenz eₚ - e_{q}. Der Divisor ist gegeben durch den größten gemeinsamen Teiler g der um eins verminderten ersten Primzahl, p-1, und der um eins verminderten zweiten Primzahl, q-1. Mit anderen Worten, es gilt: m : = (eₚ - e_{q})/g.

Nun ist es möglich, den öffentlichen Exponenten e aus den berechneten Anteilen des öffentlichen Exponenten e, einigen Komponenten des geheimen Exponenten d sowie geeigneten, vorstehend beschriebenen Zwischenergebnisse abzuleiten.

Einmal kann eine solche Ableitung mittels des ersten Anteils eₚ des öffentlichen Exponenten e, des dritten Anteils m des öffentlichen Exponenten e, des ersten Faktors r aus der Darstellung des Teilers g sowie der um eins verminderten ersten Primzahl, p-1, erfolgen. Konkret lässt sich der öffentliche Exponent e gemäß der folgenden Gleichung bestimmen:
e := eₚ - m*r*(p-1) mod kgV(p-1, q-1), d.h. das Ableiten des öffentlichen Exponenten e erfolgt dadurch, dass von dem ersten Anteil eₚ des öffentlichen Exponenten e ein Produkt subtrahiert wird, wobei das Produkt den dritten Anteil m des öffentlichen Exponenten e, den ersten Faktor r aus der Darstellung des Teilers g und die um eins verminderte erste Primzahl, p-1, umfasst.
Die Subtraktion erfolgt dabei modulo des von den beiden Primzahlen p und
q abgeleiteten Werts kgV(p-1, q-1).

Alternativ kann eine solche Ableitung mittels des zweiten Anteils e_{q} des öffentlichen Exponenten e, des dritten Anteils m des öffentlichen Exponenten e, des zweiten Faktors s aus der Darstellung des Teilers g sowie der um eins verminderten zweiten Primzahl, q-1, erfolgen. Konkret lässt sich der öffentliche Exponent e gemäß dieser Alternative wie folgt bestimmen:
e := e_{q} + m*s*(q-1) mod kgV(p-1, q-1), d.h. das Ableiten des öffentlichen Exponenten e erfolgt dadurch, dass der zweite Anteil eq des öffentlichen Exponenten e zu einem Produkt addiert wird, wobei das Produkt hier den dritten Anteil m des öffentlichen Exponenten e, den zweiten Faktor s aus der Darstellung des Teilers g und die um eins verminderte zweite Primzahl, q-1, umfasst. Die Addition erfolgt auch hier modulo des von den beiden Primzahlen p und q abgeleiteten Werts kgV(p-1, q-1).

Als portabler Datenträger, auf welchem dieses Verfahren implementiert ist, kommt beispielsweise eine Chipkarte, eine Speicherkarte, eine (U)SIM-Mobilfunkkarte oder dergleichen in Frage.

Mit Bezug auf die anliegenden Zeichnungen wird die Erfindung im Folgenden beispielhaft beschrieben.

Darin zeigen:
Figur 1 eine bevorzugte Ausführungsform des erfindungsgemäßen Datenträgers und
Figur 2 Schritte einer bevorzugten Ausführungsform des erfindungsgemäßen Verfahrens.

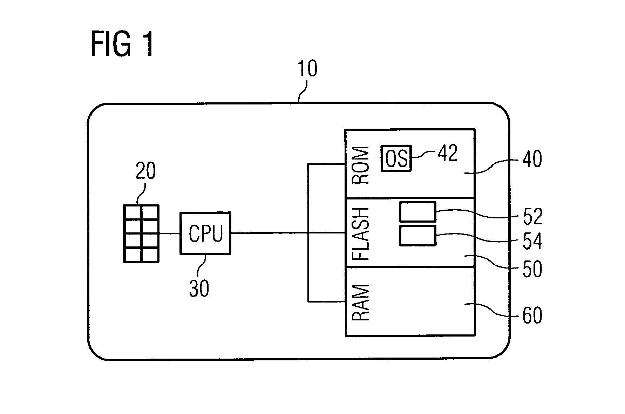

Mit Bezug auf Fig.1 umfasst ein Datenträger 10, der hier als Chipkarte dargestellt ist, eine Datenkommunikationsschnittstelle 20, einen Prozessor 30 sowie verschiedene Speicher 40,50 und 60. Der Datenträger 10 kann auch in anderer Bauform vorliegen.

Als Datenkommunikationsschnittstelle 20 umfasst der Datenträger 10 ein Kontaktfeld 20 zur kontaktbehafteten Datenkommunikation. Alternativ oder zusätzlich kann eine Antennenspule (nicht gezeigt) zur kontaktlosen Datenkommunikation vorgesehen sein.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

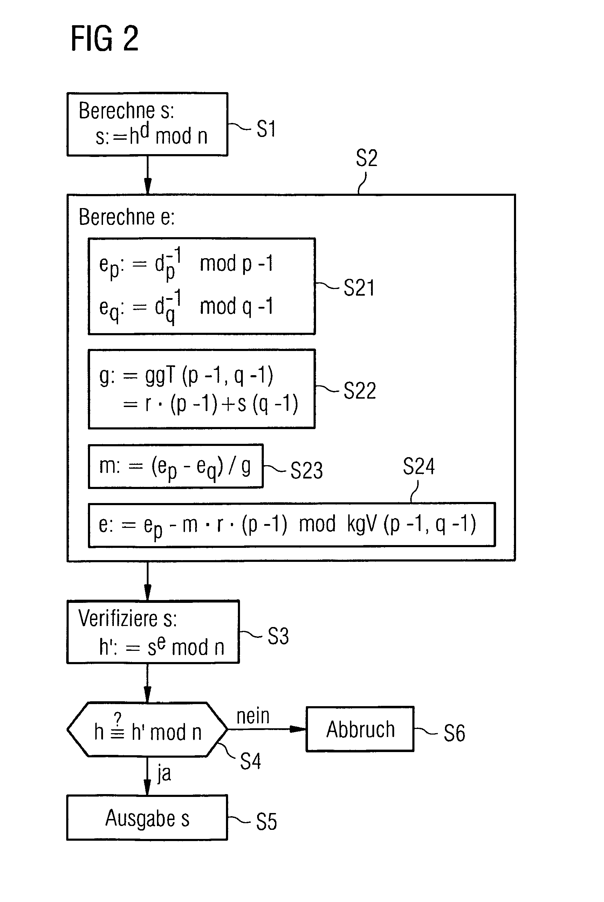

Der Speicher 50 umfasst eine Kryptographieeinrichtung 52, mittels welcher kryptographische Funktionen, insbesondere ein RSA-Verfahren, berechnet werden können. Die Funktionsweise der Kryptographieeinrichtung 52 wird mit Bezug auf Fig. 2 genauer beschrieben. Eine ebenfalls in dem Speicher 50 gespeicherte Verifikationseinrichtung 54 dient im weiteren Sinne der Erkennung von Fehlerangriffen auf den Datenträger 10, insbesondere auf die Berechnung kryptographischer Funktionen in dem Datenträger 10. Die Funktionsweise der Verifikationseinrichtung 54 wird nachfolgend mit Bezug auf Fig. 2 genauer beschrieben. Der Speicher 50 kann weitere Applikationen und Daten enthalten, beispielsweise geheime Schlüssel oder Anteile davon.

Der flüchtige, wiederbeschreibbare RAM-Speicher 60 dient dem Datenträger 10 als Arbeitsspeicher.

Die Kryptographieeinrichtung 52 ist eingerichtet, spezielle kryptographische Funktionen durchzuführen. Mit Bezug auf Fig. 2 soll im Folgenden dargestellt werden, wie ein Fehlerangriff auf eine Berechnung einer digitalen Signatur durch die Kryptographieeinrichtung 52 dadurch sicher erkannt und verhindert wird, dass die Verifikationseinrichtung 54 die berechnete Signatur verifiziert, bevor diese durch den Datenträger 10 ausgegeben wird.

Mit Bezug auf Fig. 2 wird eine digitale Signatur s in einem ersten Schritt S1 dadurch berechnet, dass ein gegebener Klartext h einer kryptographischen Funktion unterworfen wird. Diese Berechnung erfolgt durch die Kryptographieeinrichtung 52. Im beschriebenen Beispiels erfolgt die Berechnung der Signatur s gemäß einem RSA-Verfahren, d.h. s berechnet sich als s = h^{d} mod n, wobei d einen geheimen Exponenten darstellt, der zusammen mit zwei geheimen Primzahlen p und q den geheimen Schlüssel ausmacht. Die Zahl n in der obigen Gleichung ist das Produkt der Primzahlen p und q, n = p*q. Der dem geheimen Schlüssel d entsprechende öffentliche Schlüssel e wird zur Berechnung der Signatur s nicht benötigt und ist im Gegensatz zu den Primzahlen p und q nicht in dem Speicher 50 des Datenträgers 10 gespeichert.

Die Berechnung der Signatur s erfolgt vorzugsweise in einem nachstehend beschriebenen Verfahren. Dazu werden folgende Komponenten des geheimen Schlüssels benötigt: Zum einen die beiden Primzahlen p und q sowie zum anderen ein erster und ein zweiter Anteil dₚ und d_{q} des geheimen Exponenten d. Diese Anteile berechnen sich, indem der Exponent d modulo p-1 - im Falle von dₚ - bzw. q-1 - im Falle von dq - reduziert wird, d.h. dₚ = d mod p-1 und d_{q} = d mod q-1. Schließlich kann auch der Klartext h modulo p bzw. q reduziert werden, wodurch sich Anteile hₚ = h mod p und h_{q} = h mod q ergeben. Es gilt nun, dass sich eine Berechnung von s = h^{d} mod n auch vermöge der Vorschrift s = sₚ + p (((1/p) mod q) (sₚ -s_{q}) mod q) durchführen lässt, wobei sₚ := hₚ^{dp} mod p und s_{q} := h_{q}^{dq} mod q gesetzt wird. Die Berechnung beruht auf dem Chinesischen Restsatz und ist hinsichtlich der Anzahl erforderlicher Rechenschritte zumindest dreimal schneller als das hergebrachte Verfahren eines wiederholten Quadrierens. Zudem benötigt das Berechnungsverfahren nur etwa die Hälfte des konventionell benötigten Speicherplatzes.

Ein Fehlerangriff auf diese Berechnung kann dadurch erkannt werden, dass die Signatur s, bevor sie in Schritt S5 ausgegeben wird, datenträgerintern verifiziert wird (vgl. Schritt S3). Dazu ist es erforderlich, dass der Wert h' berechnet wird vermöge der Gleichung h':= s^{e} mod n. Die Berechnung von h' kann dabei analog zu der Berechnung von s erfolgen. Wenn h' mit dem ursprünglichen Klartext h übereinstimmt, zumindest wenn also h' ≡ h mod n gilt, kann davon ausgegangen werden, dass die Berechnung der Signatur s in Schritt S1 nicht gestört worden ist.

In dem Fall allerdings, dass in Schritt S4 festgestellt wird, dass h' nicht kongruent h modulo n ist, dass also aller Wahrscheinlichkeit nach die Berechnung der Signatur s in Schritt S1 durch einen Fehlerangriff gestört worden ist, wird das Verfahren in Schritt S6 abgebrochen. Insbesondere wird die eventuell gestörte Signatur nicht ausgegeben, um dem Angreifer keine Information über in dem Datenträger 10 gespeicherte geheime Daten, insbesondere die geheimen Primzahlen p und q, zu liefern. Ein entsprechender Fehlerangriff ist damit wirkungsvoll erkannt und abgewehrt.

Um allerdings die Verifikation in Schritt S3 durchführen zu können - dazu ist die Verifikationseinrichtung 54 eingerichtet -, ist es erforderlich, in einem vorhergehenden Schritt S2 (einmal) den öffentlichen Exponenten e zu berechnen. Dieser ist zunächst nicht in dem Speicher 40 des Datenträgers 10 gespeichert. Auch diese Berechnung kann durch die Verifikationseinrichtung 54 durchgeführt werden. Der Exponent e wird bevorzugt nur einmal berechnet und der berechnete Exponent e danach im Datenträger abgespeichert. Damit ist er nicht nur für die aktuelle Signatur, sondern auch für spätere Signaturvorgänge verfügbar. Im Verfahren von Fig. 2 ist Schritt S2 ein optionaler Schritt, der vorzugsweise nur einmal ausgeführt wird. Der Schritt S2 kann insbesondere bei der ersten Verwendung des geheimen Schlüssels ausgeführt werden.

Die Berechnung des öffentlichen Exponenten e, welche im Folgenden gemäß einer ersten Ausführungsform beschrieben wird, kann in verschiedene Teilschritte unterteilt werden, deren Reihenfolge nur bedingt vorgegeben ist. Insbesondere kann die Reihenfolge der nachstehend beschriebenen Teilschritte S21 und S22 leicht ersichtlich vertauscht werden.

In einem ersten Teilschritt S21 werden jeweils die Inversen der Anteile dp und dq bestimmt. Diese Inversen bilden Anteile des zu berechnenden öffentlichen Exponenten e. Konkret werden Anteile eₚ und eq definiert durch die Gleichungen: eₚ := dₚ⁽⁻¹⁾ mod (p-1) und e_{q} := d_{q}⁽⁻¹⁾ mod (q-1). Diese Berechnung kann beispielsweise mittels des Euklidischen Algorithmus erfolgen.

In Teilschritt S22 wird der größte gemeinsame Teiler der jeweils um eins verringerten Primzahlen p und q bestimmt, g:= ggT(p-1, q-1). Diese Bestimmung erfolgt vorzugsweise mittels des erweiterten Euklidischen Algorithmus. Auf diese Weise wird eine Darstellung des Teilers g in der Folgenden Weise erhalten: g = ggT(p-1, q-1) = r*(p-1) + s*(q-1).

In einem dritten Teilschritt S23 wird ein Quotient m bestimmt, der aus einer Division der Differenz eₚ - eq durch den Teiler g gegeben ist: m := (eₚ - e_{q})/g. Diese Division ist immer ohne Rest möglich, wie die folgende Überlegung zeigt: Nach Definition von dₚ und d_{q} gilt: d = kₚ*(p-1) + dp bzw. d = k_{q}*(q-1) + d_{q}, wobei kₚ und k_{q} ganze Zahlen sind. Daraus ist ersichtlich, dass d ≡ dₚ naturvorgänge verfügbar. Im Verfahren von Fig. 2 ist Schritt S2 ein optionaler Schritt, der vorzugsweise nur einmal ausgeführt wird. Der Schritt S2 kann insbesondere bei der ersten Verwendung des geheimen Schlüssels ausgeführt werden.

Die Berechnung des öffentlichen Exponenten e, welche im Folgenden gemäß einer ersten Ausführungsform beschrieben wird, kann in verschiedene Teilschritte unterteilt werden, deren Reihenfolge nur bedingt vorgegeben ist. Insbesondere kann die Reihenfolge der nachstehend beschriebenen Teilschritte S21 und S22 leicht ersichtlich vertauscht werden.

In einem ersten Teilschritt S21 werden jeweils die Inversen der Anteile dp und d_{q} bestimmt. Diese Inversen bilden Anteile des zu berechnenden öffentlichen Exponenten e. Konkret werden Anteile eₚ und eq definiert durch die Gleichungen: eₚ:= dₚ⁽⁻¹⁾ mod (p-1) und e_{q} := d_{q}⁽⁻¹⁾ mod (q-1). Diese Berechnung kann beispielsweise mittels des Euklidischen Algorithmus erfolgen.

In Teilschritt S22 wird der größte gemeinsame Teiler der jeweils um eins verringerten Primzahlen p und q bestimmt, g:= ggT(p-1, q-1). Diese Bestimmung erfolgt vorzugsweise mittels des erweiterten Euklidischen Algorithmus. Auf diese Weise wird eine Darstellung des Teilers g in der Folgenden Weise erhalten: g = ggT(p-1, q-1) = r*(p-1) + s*(q-1).

In einem dritten Teilschritt S23 wird ein Quotient m bestimmt, der aus einer Division der Differenz eₚ - eq durch den Teiler g gegeben ist: m := (eₚ - e_{q})/g. Diese Division ist immer ohne Rest möglich, wie die folgende Überlegung zeigt: Nach Definition von dₚ und d_{q} gilt: d = kₚ*(p-1) + dₚ bzw. d = k_{q}*(q-1) + d_{q}, wobei kₚ und k_{q} ganze Zahlen sind. Daraus ist ersichtlich, dass d ≡ dₚ mod g und d ≡ d_{q} mod g gilt, da g größter gemeinsamer Teiler von p-1 und q-1 ist. Aus den beiden definierenden Gleichungen in Teilschritt S21 folgt nun direkt, dass eₚ ≡ e_{q} mod g ist, gleichbedeutend damit, dass g die Differenz eₚ - e_{q} teilt.

In einem letzten Teilschritt S24 wird schließlich der öffentliche Exponent e aus in den vorstehenden Schritten berechneten Zwischenwerten und unter Verwendung von Komponenten des geheimen Exponenten d abgeleitet.

In der beschriebenen Variante bestimmt sich e vermöge der Gleichung:
e := eₚ - m*r*(p-1) mod kgV(p-1, q-1). Dass ein derart berechneter Wert e tatsächlich dem gesuchten öffentlichen Exponenten e entspricht, kann dadurch gezeigt werden, dass die den öffentlichen Exponenten e definierende Gleichung e*d ≡ 1 mod kgV(p-1, q-1) überprüft wird.

Aus der Gleichung zur Berechnung von e in Teilschritt S24 folgt direkt, dass e ≡ eₚ mod p-1 gilt. Diese Einsicht, kombiniert mit den Gleichungen, die in Teilschritt S21 aufgestellt worden sind, liefert e*d ≡ eₚ dₚ ≡ 1 mod (p-1).

Weiterhin gilt:

| | | | |
|---|---|---|---|
| e | ≡ eₚ - m*r*(p-1) | mod (q-1) | aus Teilschritt S24 |
| | ≡ eₚ - m*(g - s*(q-1)) | mod (q-1) | aus Teilschritt S22 |
| | ≡ eₚ - m*g | mod (q-1) | |
| | ≡ eₚ - (eₚ - e_{q}) | mod (q-1) | aus Teilschritt S23 |
| | ≡ e_{q} | mod (q-1). | |

Damit folgt e*d ≡ e_{q} d_{q} ≡ 1 mod (q-1) und daraus, aus der entsprechenden, vorstehend abgeleiteten Gleichung mit p anstatt q, schließlich e*d ≡ 1 mod kgV(p-1, q-1), was zu zeigen war.

Alternativ kann e in Teilschritt S24 auch als e := e_{q} + m*s*(q-1) mod kgV(p-1, q-1) bestimmt werden. Die Überlegungen zur Korrektheit eines derart bestimmten Wertes verlaufen direkt analog zu vorstehend angestellten und werden hier nicht wiederholt.

Gemäß einer zweiten Ausführungsform kann der öffentliche Exponent auf im Vergleich zur ersten Ausführungsform leicht abgewandelte Weise berechnet werden. Kompakt dargestellt unterscheidet sich das Verfahren gemäß der zweiten Ausführungsform von dem vorstehend beschriebenen Verfahren dadurch, dass ein dem ersten Teilschritt S21 entsprechender Schritt entfällt, dass die Teilschritte S22 bis S24 mit dₚ anstelle von eₚ und d_{q} anstelle von e_{q} durchgeführt werden, wodurch in Schritt S24 konsequenterweise dann d anstelle von e berechnet wird. Schließlich wird in einem weiteren Teilschritt, welcher in der ersten Ausführungsform keine Entsprechung findet, e aus d und der Bedingung e*d ≡ 1 mod kgV(p-1, q-1) bestimmt, beispielsweise wieder mittels des Euklidischen Algorithmus. Die Überlegungen zur Korrektheit dieses Verfahrens sind anlog zu den vorstehend angestellten und können deshalb hier unterbleiben.

Abschließend wird das Verfahren gemäß der ersten Ausführungsform anhand eines einfachen Beispiels erläutert. Als Komponenten des geheimen Exponenten d, welcher hier mit d = 3 gewählt wird, seien in dem Datenträger 10 die Werte p = 17 und q = 29 sowie dₚ ≡ 3 mod 16 = 3 und d_{q} ≡ 3 mod 28 = 3 gespeichert. Es ist kgV(p-1, q-1) = kgV(16, 28) = 112.

In Teilschritt S21 berechnen sich daraus die ersten beiden Anteile des öffentlichen Exponenten eₚ und eq als eₚ = 11 und eq = 19. Dies gilt, da eₚ* dₚ =11*3 = 33 ≡ 1 mod 16 und e_{q}* 3 = 19*3 = 57 ≡ 1 mod 28.

In Teilschritt S22 berechnet sich g als g = ggT(16, 28) = 4 = 2*16 -1*28; d.h. r = 2 und s *=* -1.

Aus Teilschritt S23 ergibt sich dann m = (eₚ - e_{q} )/g = (11-19)/4 = -2.

Schließlich berechnet sich e in Teilschritt S24 als
e = eₚ - m*r*(p-1) mod kgV(p-1, q-1)
= 11 - (-2)*2*16 mod 112
= 11 + 64 = 75 mod 112 = 75
oder alternativ als
e = e_{q} + m*s*(q-1) mod kgV(p-1, q-1)
= 19 + (-2)*(-1)*28 = 75 mod 112 = 75.

Wie leicht zu erkennen ist, gilt e*d = 3 * 75 = 225 ≡ 1 mod 112.

Im Folgenden wird noch eine alternative Ausgestaltung der konkreten Berechnungsabfolge diskutiert.

Grundsätzlich unterscheidet sich die Berechnung während der Verifikation in Schritt S3 (h':= s^{e} mod n) prinzipiell nicht von der Berechnung der Signatur s in Schritt S1 (s:=h^{d} mod n). Man kann also theoretisch auch die Berechnung von h' wie die Berechnung von s basierend auf dem CRT durchführen. Dazu sind nicht der öffentliche Exponent e an sich, sondern, neben den Primzahlen p und q, lediglich die Reste von e modulo p1 und e modulo q1, also etwa eₚ' := e mod p1 und e_{q}' := e mod q1, notwendig.

Wie aus dem Beweis der Korrektheit des erfindungsgemäßen Verfahrens ersichtlich, erfüllen die in Teilschritt S21 berechneten Werte eₚ und eq diese Bedingungen. In Fig. 2 könnte also Schritt S2 auf die Berechnung von ep und e_{q} reduziert werden. Diese Werte würden dann wie beschrieben (anstelle des Exponenten e) gespeichert. Eine Verifikation von s könnte CRT-basiert bereits in Kenntnis dieser beiden Werte eₚ und eq durchgeführt werden, ohne dass die weiteren Schritte zur Bestimmung von e noch notwendig wären. Ein Vorteil dieser Variante wäre es, dass das Verfahren für große Werte von e schneller wäre. Zudem kann man ggf. auch größere Schlüssellängen bewältigen.

Die in Figur 2 gezeigte, bevorzugte Ausgestaltung weist jedoch eine höhere Sicherheit auf. Mit dem dargestellten Verfahren sollen durch einen Angreifer induzierte/ provozierte Fehler bei der Signaturberechnung erkannt werden. Da die Verifikation mit dem von der Signaturberechnung vollständig unabhängig erzeugten Wert e durchgeführt wird, werden solche Fehler in der Signaturberechnung mit einer wesentlich erhöhten Wahrscheinlichkeit detektiert. Die Wahrscheinlichkeit wird dadurch weiter erhöht, dass der Wert des Exponenten e nur einmal berechnet und danach als unabhängiger Wert verwendet wird.

## Patentansprüche

1. Verfahren zur gesicherten Implementierung einer kryptographischen Funktion auf einem portablen Datenträger (10) gegen Fehlerangriffe, mit den folgenden Schritten in dem tragbaren Datenträger (10):
eine auf Basis eines geheimen Schlüssels (d) in dem Datenträger (10) erzeugte (S1) digitale Signatur (s) wird mittels eines dem geheimen Schlüssel (d) zugeordneten, initial nicht in dem Datenträger (10) gespeicherten öffentlichen Schlüssels (e) verifiziert (S3; S4), bevor die Signatur (s) ausgegeben wird (S5), **dadurch gekennzeichnet, dass** der öffentliche Schlüssel (e) anhand von in dem Datenträger (10) gespeicherten Komponenten (p; q; dp; d_{q}) des geheimen Schlüssels (d) in dem Datenträger (10) berechnet wird (S2).

2. Verfahren nach Anspruch 1, **dadurch gekennzeichnet, dass** die kryptographische Funktion als ein RSA-Verfahren implementiert wird, wobei der geheime Schlüssel (d) durch einen geheimen Exponenten (d) sowie eine erste (p) und eine zweite (q) geheime Primzahl vorgegeben wird und wobei der öffentliche Schlüssel (e) durch einen öffentlichen Exponenten (e) vorgegeben wird, welcher modulo einem von den beiden Primzahlen (p; q) abgeleiteten Wert (kgV(p-1, q-1)) invers zu dem geheimen Exponenten (d) ist.

3. Verfahren nach Anspruch 2, **dadurch gekennzeichnet, dass** die Komponenten (p; q; dp; d_{q}) des geheimen Schlüssels (d) durch die beiden geheimen Primzahlen (p; q) sowie durch Anteile (dₚ; d_{q}) des geheimen Exponenten (d) vorgegeben werden, wobei ein erster Anteil (dₚ) des geheimen Exponenten (d) durch den Rest des geheimen Exponenten (d) modulo der um eins verminderten ersten Primzahl (p) sowie ein zweiter Anteil (d_{q}) des geheimen Exponenten (d) durch den Rest des geheimen Exponenten (d) modulo der um eins verminderten zweiten Primzahl (q) vorgegeben werden.

4. Verfahren nach Anspruch 3, **dadurch gekennzeichnet, dass** der größte gemeinsame Teiler (g) der um eins verminderten ersten Primzahl (p) und der um eins verminderten zweiten Primzahl (q) berechnet wird.

5. Verfahren nach Anspruch 4, **dadurch gekennzeichnet, dass** der berechnete größte gemeinsame Teiler (g) als Summe eines ersten und eines zweiten Produkts dargestellt wird, wobei das erste Produkt aus einem ersten Faktor (r) und der um eins verminderten ersten Primzahl (p) gebildet wird und das zweite Produkt aus einem zweiten Faktor (s) und der um eins verminderten zweiten Primzahl (q) gebildet wird.

6. Verfahren nach Anspruch 3, 4 oder 5, **dadurch gekennzeichnet, dass** als ein erster Anteil (eₚ) des öffentlichen Exponenten (e) das Inverse des ersten Anteils (dₚ) des geheimen Exponenten (d) modulo der um eins verminderten ersten Primzahl (p) berechnet wird und dass als ein zweiter Anteil (e_{q}) des öffentlichen Exponenten (e) das Inverse des zweiten Anteils (d_{q}) des geheimen Exponenten (d) modulo der um eins verminderten zweiten Primzahl (q) berechnet wird.

7. Verfahren nach Anspruch 6, **dadurch gekennzeichnet, dass** als ein dritter Anteil (m) des öffentlichen Exponenten (e) ein Quotient (m) der Differenz des ersten (eₚ) und des zweiten (e_{q}) Anteils des öffentlichen Exponenten (e) durch den größten gemeinsamen Teiler (g) der um eins verminderten ersten Primzahl (p) und der um eins verminderten zweiten Primzahl (q) berechnet wird.

8. Verfahren nach Anspruch 7, **dadurch gekennzeichnet, dass** der öffentliche Exponent (e) aus dem ersten Anteil (eₚ) des öffentlichen Exponenten (e), dem dritten Anteil (m) des öffentlichen Exponenten, dem ersten Faktor (r) sowie der um eins verminderten ersten Primzahl (p) abgeleitet wird oder dass der öffentliche Exponent (e) aus dem zweiten Anteil (e_{q}) des öffentlichen Exponenten (e), dem dritten Anteil (m) des öffentlichen Exponenten, dem zweiten Faktor (s) sowie der um eins verminderten zweiten Primzahl (q) abgeleitet wird.

9. Verfahren nach Anspruch 8, **dadurch gekennzeichnet, dass** das Ableiten des öffentlichen Exponenten (e) dadurch erfolgt, dass von dem ersten Anteil (eₚ) des öffentlichen Exponenten (e) ein Produkt subtrahiert wird, wobei das Produkt den dritten Anteil (m) des öffentlichen Exponenten (e), den ersten Faktor (r) und die um eins verminderte erste Primzahl (p) umfasst, oder dass das Ableiten des öffentlichen Exponenten (e) dadurch erfolgt, dass zu dem zweiten Anteil (e_{q}) des öffentlichen Exponenten (e) ein Produkt addiert wird, wobei das Produkt den dritten Anteil (m) des öffentlichen Exponenten (e), den zweiten Faktor (s) und die um eins verminderte zweite Primzahl (q) umfasst, und wobei die Subtraktion und die Addition jeweils modulo des von den beiden Primzahlen (p; q) abgeleiteten Werts (kgV(p-1, q-1)) durchgeführt werden.

10. Verfahren nach einem der vorgehenden Ansprüche, **dadurch gekennzeichnet, dass** der berechnete öffentliche Schlüssel (d) in dem Datenträger (10) für weitere Schritte der Verifikation (S3) von im Datenträger erzeugten Signaturen gespeichert wird.

11. Portabler Datenträger (10), umfassend einen Prozessor (30), zumindest einen Speicher (40; 50; 60) sowie eine in dem Speicher (50) gespeicherte und durch den Prozessor (30) ausführbare kryptographische Funktion (52) zum Bilden einer digitalen Signatur (s) auf Basis eines geheimen Schlüssels (d), wobei der Datenträger (10) eingerichtet ist, die Signatur (s) vor der Ausgabe mittels eines dem geheimen Schlüssel (d) zugeordneten, nicht in dem Datenträger (10) gespeicherten öffentlichen Schlüssels (e) zu verifizieren, **gekennzeichnet durch** eine Verifikationseinrichtung (54) in dem Datenträger (10), welche eingerichtet ist, den öffentlichen Schlüssel (e) anhand von in dem Datenträger (10) gespeicherten Komponenten (p; q; dₚ; d_{q}) des geheimen Schlüssels (d) zu berechnen.

12. Datenträger (10) nach Anspruch 11, **dadurch gekennzeichnet, dass** die kryptographische Funktion als RSA-Funktion implementiert ist, wobei der geheime Schlüssel (d) durch einen geheimen Exponenten (d) sowie eine erste (p) und eine zweite (q) geheime Primzahl vorgegeben ist und wobei der öffentliche Schlüssel (e) durch einen öffentlichen Exponenten (e) vorgegeben ist.

13. Datenträger (10) nach Anspruch 12, **dadurch gekennzeichnet, dass** der öffentliche Exponent (e) modulo einem von den beiden Primzahlen (p; q) abgeleiteten Wert (kgV(p-1, q-1)) invers zu dem geheimen Exponenten (d) ist.

14. Datenträger (10) nach Anspruch 12 oder 13, **dadurch gekennzeichnet, dass** die Verifikationseinrichtung (54) eingerichtet ist, ein Verfahren nach einem der Ansprüche 1 bis 10 durchzuführen.
